# EUROPÄISCHE PATENTSCHRIFT

(11) **EP 0 445 383 B1**
(45) Veröffentlichungstag und Bekanntmachung des Hinweises auf die Patenterteilung: **30.03.1994**
(21) Anmeldenummer: 90123035.9
(22) Anmeldetag: 01.12.1990
(51) Int. Cl.: B60J 3/02

(54) **Sonnenblende, insbesondere für Fahrzeuge**
Sun visor, especially for vehicle
Pare-soleil, en particulier pour véhicule

(30) Priorität: 07.03.1990 DE 4007185
(43) Veröffentlichungstag der Anmeldung: 11.09.1991
(73) Patentinhaber: Gebr. Happich GmbH, D-42097 Wuppertal (DE)
(72) Erfinder: Happich, Otto, Dipl.-Ing., W-5600 Wuppertal 1 (DE); Cziptschirsch, Kurt, W-5600 Wuppertal 12 (DE)

(56) Entgegenhaltungen:
- DE-A- 3 404 735
- DE-A- 3 727 455
- US-A- 4 652 982

## Beschreibung

Die Erfindung bezieht sich auf eine Sonnenblende, insbesondere für Fahrzeuge, mit einem Sonnenblendenkörper, einer Ausnehmung in einer Breitseite des Sonnenblendenkörpers, einem in der Ausnehmung angeordneten wannenförmigen Gehäuse und einem vom Gehäuse aufgenommenen, umwendbar gelagerten Spiegel.

Eine Sonnenblende der gattungsgemäßen Art ist durch die DE-OS 34 04 735 bekanntgeworden. Bei dieser bekannten Sonnenblende ist vorgesehen, daß der Spiegel um eine seiner Randkanten verschwenkbar mit dieser Randkante in eine Richtung normal zur Randkante in der Spiegelebene verschiebbar und dadurch umwendbar an der Sonnenblende angeordnet ist. Durch diese Ausgestaltung soll die Aufgabe gelöst werden, eine Sonnenblende mit einem verdeckbaren Spiegel zu schaffen, bei der der Spiegel in der verdeckten oder unverdeckten Lage die gleich, z.B. mittige Anordnung an der Sonnenblende beibehält, wobei zum Verdecken des Spiegels keine über den Spiegel bringbaren Elemente mehr erforderlich sind.

Aufgabe der vorliegenden Erfindung ist es, eine Sonnenblende der eingangs genannten Art hinsichtlich der Handhabung beim Umwenden des Spiegels zu verbessern.

Demgemäß zeichnet sich die Erfindung zur Lösung dieser Aufgabe dadurch aus, daß sich in dem Gehäuse ein zwei Schenkel und ein Steg umfassender, um den Steg herum schwenkbar gelagerter Bügel in flachliegender Anordnung befindet, der drei aneinandergrenzenden Gehäusewänden eng benachbart und gegen die Rückstellkraft von Federmitteln vom Gehäuseboden wegschwenkbar ist und daß zwischen den Schenkeln des Bügels der Spiegel drehbeweglich gelagert ist.

Aufgrund dieser erfindungsgemäßen Maßnahmen ist eine Sonnenblende geschaffen, bei der der Spiegel in besonders bedienungsfreundlicher Weise gewendet werden kann, um wahlweise die Spiegelvorderseite oder die Spiegelrückseite zu verdecken. Im allgemeinen liegt die Spiegelvorderseite planparallel am Gehäuseboden an, damit von dem Spiegel keine Blendungsgefahr ausgehen kann. Nur wenn der Spiegel benutzt werden soll, z.B. für Make up - Zwecke, wird die Spiegelvorderseite durch Umwenden des Spiegels den Blicken eines Betrachters zugänglich gemacht. Das Umwenden des Spiegels kann aufgrund der erfindungsgemäßen Maßnahmen nunmehr dadurch erfolgen, daß der Spiegel an einem dem Steg des Bügels gegenüberliegenden Rand erfaßt und vom Gehäuseboden weggezogen wird. Dadurch wird gleichzeitig der Bügel hochgeschwenkt, und zwar so weit, bis sich der Spiegel frei zwischen den Bügelschenkeln zu drehen vermag und der Spiegelrand, der zunächst dem Bügelsteg benachbart war, zur dem Bügelsteg gegenüberliegenden Gehäusewand gleitet. Das Umwenden des Spiegels kann mit einem Finger einer menschlichen Hand durchgeführt werden, wobei das Hochschwenken des Spiegels und Bügels gegen die Rückstellkraft der Federmittel solange erfolgen muß, bis der Spiegel die Senkrechte gegenüber dem Gehäuseboden überschritten hat. Überschreitet der Spiegel beim Verschwenken die Senkrechte, so wird auch gleichzeitig die Totpunktlage überschritten, mit der Folge, daß die Federmittel den Spiegel, in nun umgewendeter Lage, bis in eine wieder flach auf dem Gehäuseboden aufliegende Stellung zwingen.

Die Erfindung läßt sich, unabhängig davon, ob der Spiegel von oben nach unten, von unten nach oben, von rechts nach links oder von links nach rechts verschwenkt werden soll, verwirklichen, so daß in hohem Maße auf Käuferwünsche eingegangen werden kann.

Bevorzugterweise ist der Spiegel um seine Längsmittelachse drehbar an den Schenkeln des Bügels angelenkt. Damit wird der geringste Raum für das Umwenden benötigt.

Es kann weiterhin vorgesehen sein, daß der Spiegel über seinen etwa halben Umfang vom Bügel eingerahmt ist. Die Drehachse zwischen Spiegel und Bügel befindet sich dann vorteilhafterweise an den freien Endbereichen der Bügelschenkel.

Eine weitere Ausgestaltung der Erfindung sieht vor, daß der Spiegel baueinheitlich mit einer rückseitigen, ihn auch umlaufend randseitig umfassenden Abdeckung ausgebildet ist, welche Drehlagerzapfen oder Zapfenaufnahmen zur drehbeweglichen Verbindung mit den Bügelschenkeln aufweist. Diese Maßnahme dient der Verschönerung, erleichtert aber auch die Herstellung und Montage der Drehgelenkverbindung.

Zur Erleichterung der Montage trägt es bei, wenn der Bügel in Verlängerung seines Steges mit Drehlagerzapfen ausgebildet ist, die in am Gehäuse vorgesehene Lageraugen, z.B. durch Klipsmontage einbringbar sind.

Gemäß einer Weiterbildung der Erfindung, ist der Bügel mit mindestens einer Rückstellfeder ausgerüstet, die durch Hochschwenken des Bügels gespannt wird und die Bügelschenkel permanent in Richtung zum Gehäuseboden hin belastet. Bei der Rückstellfeder kann es sich zweckmäßigerweise um eine z.B. als Schraubenfeder ausgebildete Torsionsfeder handeln, die auf zumindest einem Drehlagerzapfen des Bügels sitzt und mit einem Ende an einem Bügelschenkel angreift. Zwecks gleichmäßiger Belastung empfiehlt sich die Verwendung von zwei Rückstellfedern, wobei jedem Bügelschenkel eine Feder zuzuordnen ist.

Das gute Aussehen der Sonnenblende läßt sich dadurch optimieren, daß das Gehäuse mit einem , die Einrahmung des Spiegels durch den Bügel ergänzenden Füllrahmen versehen ist. Sofern das Gehäuse, wie bevorzugt vorgesehen, als Kunststoff-Spritzgußteil ausgeführt wird, läßt sich ein solcher Füllrahmen auch in kostengünstigerweise einstückig anformen.

Um den Spiegel der Sonnenblende auch bei Dunkelheit benutzen zu können, kann gemäß einer weiteren bevorzugten Ausgestaltung der Erfindung vorgesehen sein, daß das Gehäuse mit zumindest einer Gehäuseerweiterung zur Aufnahme einer elektrischen Beleuchtungseinrichtung ausgebildet ist.

Ein Ausführungsbeispiel der Erfindung wird nachfolgend anhand der Zeichnung näher erläutert. Es zeigen
- Fig. 1: eine Fahrzeugsonnenblende in Ansicht,
- Fig. 2: einen Schnitt etwa folgend der Linie II - II in Fig. 1,

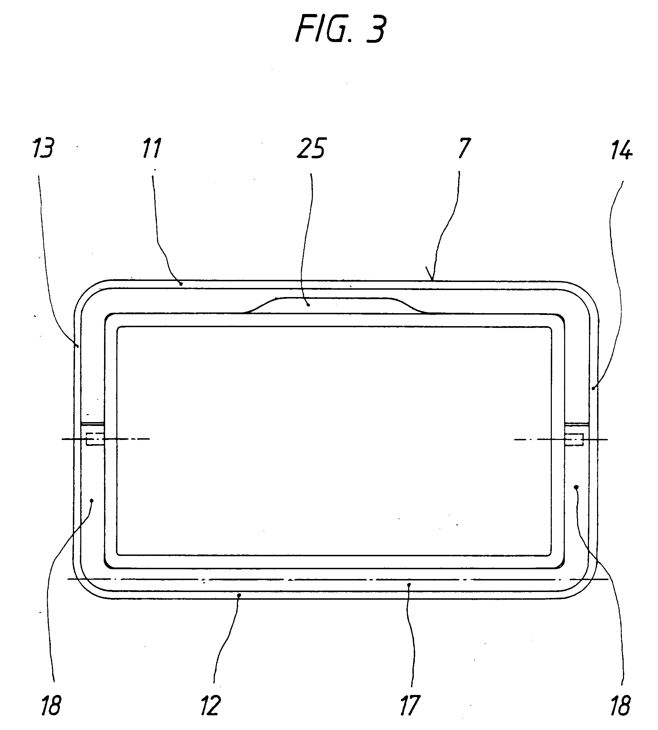

- Fig. 3: einen Spiegelzusammenbau in Ansicht und

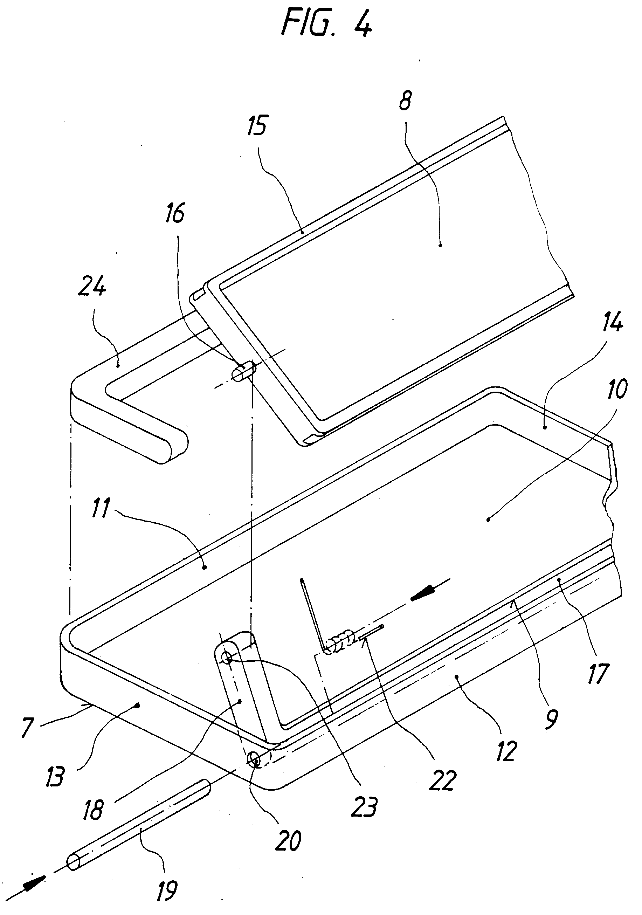

- Fig. 4: den Spiegelzusammenbau in einer schaubildlichen Explosivdarstellung.

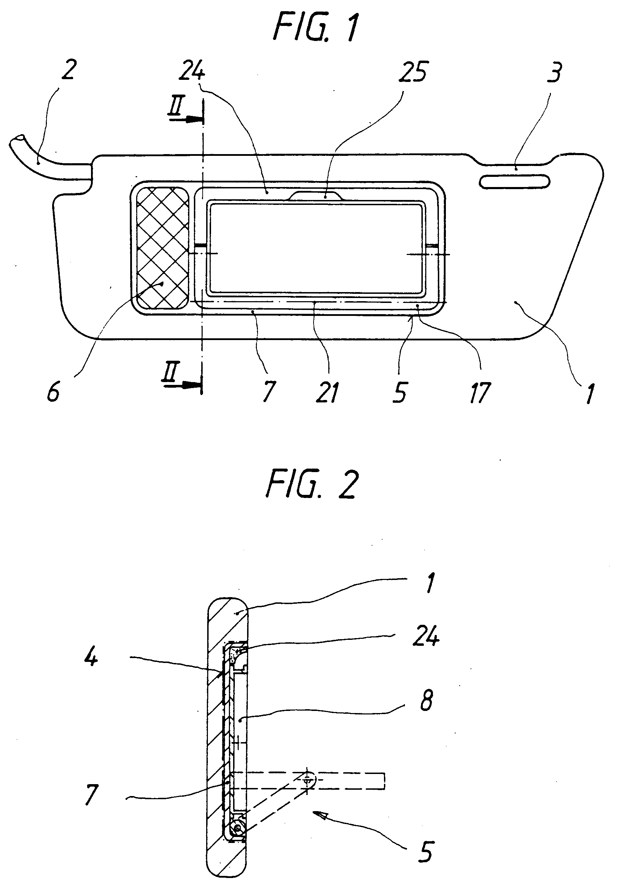

Fig. 1 und 2 zeigen eine Fahrzeugsonnenblende mit einem Sonnenblendenkörper 1, der im Bereich seiner oberen Längskante eine im Sonnenblendenkörper 1 eingelagerte Sonnenblendenachse 2 und einen Drehlagerzapfen 3 aufweist. Der Sonnenblendenkörper 1 ist an einer seiner Breitseiten mit einer offenen Ausnehmung 4 ausgebildet, die zur Aufnahme eines Spiegelzusammenbaus 5 dient. Zum Spiegelzusammenbau 5 gehört in der Regel auch eine, im Sonnenblendenkörper 1 untergebrachte Beleuchtungseinrichtung 6, wie sie in Fig. 1 gezeigt ist. Eine Beleuchtungseinrichtung kann links und/oder rechts neben dem Spiegel, wie auch ober- und/oder unterhalb desselben angeordnet sein und ihre elektrische Stromversorgung vom Bordnetz eines Fahrzeuges in an sich bekannter Weise beziehen.

Der Spiegelzusammenbau umfaßt ein in die Ausnehmung in des Sonnenblendenkörpers 1 eingesetztes Gehäuse 7, einen vom Gehäuse 7 aufgenommenen Spiegel 8 sowie einen vom Gehäuse 7 aufgenommenen Bügel 9.

Im dargestellten Ausführungsbeispiel weist das Gehäuse 7 eine rechteckige Gestaltung auf und besitzt einen Boden 10, eine obere Gehäusewand 11, eine untere Gehäusewand 12 und zwei Gehäuseseitenwände 13 und 14. Das Gehäuse 7 ist als Kunststoff-Spritzgußteil ausgebildet.

Der Spiegel 8, der ebenso wie das Gehäuse 7 eine rechteckige Ausbildung aufweist, ist mit einer rückseitigen, ihn auch umlaufend randseitig umfassenden Abdeckung 15, die aus einem Kunststoff-Spritzgußteil besteht, versehen. Die Abdeckung 15 weist in der Längssymmetrieachse angeordnete, nach außen überstehende Drehlagerzapfen 16 auf, die einstückig und materialeinheitlich mit der Abdeckung ausgebildet sein können.

Der Bügel 9, der ggf. auch aus einem Kunststoff-Spritzgußteil gebildet sein kann, besteht aus einem Steg 17 und den Schenkeln 18. Der Bügel 9 ist, wie insbesondere aus Fig. 1 ersichtlich, in flachliegender Anordnung im Gehäuse 7 untergebracht und dabei drei aneinandergrenzenden Gehäusewänden 12, 13, 14 eng benachbart. Insbesondere ist der Bügel 9 um seinen Steg 17 herum schwenkbar im Gehäuse gelagert, wozu eine den Steg 17 über die Länge durchsetzende Achse 19 oder an den Stegenden überstehend angeordnete Achszapfen (nicht gezeigt) vorgesehen sein können. Die Achszapfen oder die Enden der Achse 19 greifen in Lagerbohrungen 20, die in den Gehäuseseitenwänden 13, 14 vorgesehen sind ein, so daß der Bügel 9 um die Schwenkachse 21 (Fig. 1) herum, vom Gehäuseboden 10 weg, hochgeschwenkt werden kann. Mindestens eine Torsionsfeder 22, deren eines Ende am Steg 17 und deren anderes Ende an einem Schenkel 18 abgestützt ist, sorgt dafür, daß der Bügel 9 permanent in Richtung auf eine Anlage am Boden 10 des Gehäuses 7 belastet ist. Der Bügel 9 weist weiterhin an den freien Endbereichen seiner Schenkel 18 Lagerbohrungen 23 zur Aufnahme der Drehlagerzapfen 16 der Spiegelabdeckung 15 auf. Damit ist der Spiegel 8 frei drehbeweglich zwischen den Schenkeln 18 des Bügels 9 gelagert.

Mehr aus Gründen der Symmetrie und des guten Aussehens, ist der Spiegel 8 bzw. die Spiegelabdeckung 15 umrahmt, und zwar über etwas mehr als den halben Umfang von dem Bügel 9 und weiterhin durch einen Füllrahmen 24, dessen Gestaltung der des Bügels 9 angepaßt ist. Der Füllrahmen 24 kann als Losteil aber auch einstückig mit dem Gehäuse 7 gefertigt sein. Im mittleren Bereich des Füllrahmensteges befindet sich eine Materialaussparung 25 als Grifföffnung für das Umwenden des Spiegels.

## Patentansprüche

1. Sonnenblende, insbesondere für Fahrzeuge, mit einem Sonnenblendenkörper (1), einer Ausnehmung (4) in einer Breitseite des Sonnenblendenkörpers (1), einem in der Ausnehmung (4) angeordneten wannenförmigen Gehäuse (7) und einem vom Gehäuse (7) aufgenommenen, umwendbar gelagerten Spiegel (8), dadurch gekennzeichnet, daß sich in dem Gehäuse (7) ein zwei Schenkel (18) und einen Steg (17) umfassender, um den Steg (17) herum schwenkbar gelagerter Bügel (9) in flachliegender Anordnung befindet, der drei aneinandergrenzenden Gehäusewänden (12, 13, 14) eng benachbart und gegen die Rückstellkraft von Federmitteln (22) vom Gehäuseboden (10) wegschwenkbar ist und daß zwischen den Schenkeln (18) des Bügels (9) der Spiegel (8) drehbeweglich gelagert ist.

2. Sonnenblende nach Anspruch 1, dadurch gekennzeichnet, daß der Spiegel (8) um seine Längsmittenachse drehbar an den Schenkeln (18) des Bügels (9) angelenkt ist.

3. Sonnenblende nach Anspruch 1 oder 2, dadurch gekennzeichnet, daß der Spiegel (8) über seinen etwa halben Umfang vom Bügel (9) eingerahmt ist.

4. Sonnenblende nach wenigstens einem der Ansprüche 1 bis 3, dadurch gekennzeichnet, daß der Spiegel (8) baueinheitlich mit einer rückseitigen, ihn auch umlaufend randseitig umfassenden Abdeckung (15) ausgebildet ist, welche Drehlagerzapfen (16) oder Zapfenaufnahmen zur drehbeweglichen Verbindung mit den Schenkeln (18) des Bügels (9) aufweist.

5. Sonnenblende nach wenigstens einem der Ansprüche 1 bis 4, dadurch gekennzeichnet, daß der Bügel (9) in Verlängerung seines Steges (17) mit Drehlagerzapfen ausgebildet ist, die in am Gehäuse (7) vorgesehene Lageraugen (20), z.B. durch Klipsmontage einbringbar sind.

6. Sonnenblende nach wenigstens einem der Ansprüche 1 bis 5, dadurch gekennzeichnet, daß der Bügel (9) mit mindestens einer Rückstellfeder (22) ausgerüstet ist, die durch Hochschwenken des Bügels (9) gespannt wird und die Bügelschenkel (18) permanent in Richtung zum Gehäuseboden (10) hin belastet.

7. Sonnenblende nach wenigstens einem der Ansprüche 1 bis 6, dadurch gekennzeichnet, daß das Gehäuse (7) mit einem, die Einrahmung des Spiegels (8) durch den Bügel (9) ergänzenden Füllrahmen (24) versehen ist.

8. Sonnenblende nach wenigstens einem der Ansprüche 1 bis 7, dadurch gekennzeichnet, daß das Gehäuse (7) mit zumindest einer Gehäuseerweiterung zur Aufnahme einer elektrischen Beleuchtungseinrichtung (6) ausgebildet ist.

## Claims

1. A sun visor, especially for vehicles, with a sun visor body (1), a recess (4) in one wide side of the sun visor body (1), a trough-like housing (7) arranged in the recess (4) and a mirror (8) accommodated by the housing (7) such that it can be rotated, characterised in that a frame (9), comprising two limbs (18) and one connecting portion (17), is arranged flatly within the housing (7) such that it may be swivelled around the connecting portion (17) and close to three housing walls (12, 13, 14) which are contiguous with each other, and can be swivelled away from the housing bottom (10) against the elastic force of spring devices (22), and that the mirror (8) is accommodated between the limbs (18) of the frame (9) such that it can be rotated.

2. A sun visor according to Claim 1, characterised in that the mirror (8) is pivotable with the limbs (18) of the frame (9) along its longitudinal axis so that it can rotate.

3. A sun visor according to either Claim 1 or 2, characterised in that the mirror (8) is enclosed by the frame (9) over approximately half its circumference.

4. A sun visor according to any one of Claims 1 to 3, characterised in that the mirror (8) is provided with an integral rear cover (15) which also encloses its entire periphery and is provided with pivot bearing pins (16) or journal receptacles for rotational connection with the limbs (18) of the frame (9).

5. A sun visor according to any one of Claims 1 to 4, characterised in that the frame (9) is provided with pivot bearing pins, as an extension of the connecting portion (17), which can be introduced into bearing eyes (20) in the housing (7), for instance through a clip assembly.

6. A sun visor according to any one of Claims 1 to 5, characterised in that the frame (9) is provided with at least one return spring (22) which is tensioned by the upward swivel movement of the frame (9) and exerts a continuous force on the frame limbs (18) in the direction of the housing bottom (10).

7. A sun visor according to any one of Claims 1 to 6, characterised in that the housing (7) is provided with a filler frame (24) which augments the framing of the mirror (8) by the frame (9).

8. A sun visor according to any one of Claims 1 to 7, characterised in that the housing (7) is provided with at least one housing extension to accommodate an electrical illumination device (6).

## Revendications

1. Pare-soleil, en particulier pour véhicule, comportant un corps (1), un évidement (4) dans un côté de la largeur du corps (1), un boîtier (7) en forme de cuvette placé dans l'évidement (4) et un miroir (8) monté réversible, logé dans le boitier (7), caractérisé en ce que dans le boîtier (7) est monté à plat un étrier (9) comportant deux branches (18) et une traverse (17), pivotant autour de la traverse (17), lequel étrier se trouve très près des trois parois (12, 13, 14) adjacentes du boîtier et peut être éloigné par pivotement du fond (10) du boîtier, à l'encontre de la force de rappel de moyens à ressort (22) et en ce que le miroir (8) est monté tournant entre les branches (18) de l'étrier (9).

2. Pare-soleil selon la revendication 1, caractérisé en ce que le miroir (8) s'articule sur les branches (18) de l'étrier (9), de manière à pouvoir tourner autour de son axe médian longitudinal.

3. Pare-soleil selon les revendications 1 ou 2, caractérisé en ce que le miroir (8) est encadré par l'étrier (9), sur environ la moitié de sa circonférence.

4. Pare-soleil selon l'une au moins des revendications 1 à 3, caractérisé en ce que le miroir (8) est conçu d'un bloc avec un couvercle (15) arrière, l'entourant aussi de manière continue sur ses bords, lequel couvercle comporte des pivots (16) ou des logements de pivot pour la liaison tournante avec les branches (18) de l'étrier (9).

5. Pare-soleil selon l'une au moins des revendications 1 à 4, caractérisé en ce que l'étrier (9) présente, dans le prolongement de sa traverse (17), des pivots qui peuvent être insérés, par exemple par clipsage, dans des oeillets (20) formant paliers, prévus sur le boîtier (7).

6. Pare-soleil selon l'une au moins des revendications 1 à 5, caractérisé en ce que l'étrier (9) est équipé d'au moins un ressort de rappel (22) qui est tendu lorsque l'étrier (9) est relevé et qui agit en permanence, en direction du fond (10) du boîtier, sur les branches (18) de l'étrier.

7. Pare-soleil selon l'une au moins des revendications 1 à 6, caractérisé en ce que le boîtier (7) est pourvu d'un cadre de remplissage (24) complétant l'encadrement du miroir (8) par l'étrier (9).

8. Pare-soleil selon l'une au moins des revendications 1 à 7, caractérisé en ce que le boîtier (7) présente au moins un élargissement destiné à loger un dispositif d'éclairage (6) électrique.
